# EUROPÄISCHE PATENTSCHRIFT

(11) **EP 2 628 372 B1**
(45) Veröffentlichungstag und Bekanntmachung des Hinweises auf die Patenterteilung: **27.04.2016**
(21) Anmeldenummer: 12007892.8
(22) Anmeldetag: 23.11.2012
(51) Int. Cl.: A01B 13/16, A01B 15/20

(54) **Einrichtung zur streifenweisen landwirtschaftlichen Bearbeitung von Böden**
Device for cultivating soils in strips
Installation destinée au traitement agricole des sols en bandes

(30) Priorität: 18.02.2012 DE 102012003305
(43) Veröffentlichungstag der Anmeldung: 21.08.2013
(73) Patentinhaber: Kemmner, Hartmut, 04886 Beilrode (DE)
(72) Erfinder: Kemmner, Hartmut, 04886 Beilrode (DE)
(74) Vertreter: Witte, Weller & Partner Patentanwälte mbB

(56) Entgegenhaltungen:
- DE-C- 327 885
- DE-C- 669 931
- US-A- 1 420 526
- US-A- 1 528 598

## Beschreibung

Die Erfindung bezieht sich auf eine Einrichtung zur streifenweisen landwirtschaftlichen Bearbeitung von Böden, mit mindestens einem an einem Rahmen gehaltenen und schräg nach vorn angestellten Lockerungsschar mit einem Haltearm und Schar am freien Ende dieses.

Einrichtungen dieser Art werden zum Lockern von Böden eingesetzt. Die einzelnen Lockerungsschare sind dabei in Fahrtrichtung ausgerichtet, wobei mehrere solche Lockerungsschare in einer Reihe oder in mehreren, in Fahrtrichtung aufeinanderfolgenden Reihen mit Abstand, quer zur Fahrtrichtung betrachtet, vorhanden sind. Diese einzelnen Lockerungsschare besitzen die Eigenschaft, dass durch diese der Boden streifenweise bearbeitet wird und die dabei aufgeworfene Erde auf der Oberfläche mehr oder weniger verteilt wird. Vor allem in geneigtem Gelände mit Bearbeitung quer zur Neigungsrichtung findet ein Bodenabtrag statt. Hierbei wird der Boden ständig nur talwärts bewegt. Wind und Wasser wirken in gleicher Weise noch erschwerend dazu. Die Folgen sind Erosion und dadurch bedingte Schäden. Eine sinnvolle Nutzung des Bodens wird deswegen zum Problem oder gar unmöglich, weil der ganze Mutterboden bereits zu Tal gewandert ist.

Die Druckschrift DE 669 931 C zeigt eine Einrichtung zur flächigen Bearbeitung und Wenden von Böden, nämlich zum Pflügen. Dieser Pflug weist ein Doppelstreichblech auf.

Der Erfindung liegt die Aufgabe zugrunde, eine Einrichtung der eingangs genannten Art so zu gestalten, dass der beim Lockern aufgeworfene Boden nur in eine Richtung, und zwar bevorzugt entgegen der Erosionsrichtung, bewegt wird.

Die Aufgabe ist bei einer Einrichtung zur streifenweisen landwirtschaftlichen Bearbeitung von Böden der eingangs genannten Art gemäß der Erfindung dadurch gelöst, dass am Haltearm auf dessen Vorderseite und in Abstand oberhalb des Schars mindestens eine flächige Bodenleiteinrichtung um eine auf der Vorderseite des Haltearms längs dieses verlaufende Achse schwenkbar gelagert und derart schwenkbetätigbar und beliebig arretierbar ist, dass die Bodenleiteinrichtung den beim Lockern aufgeworfenen Boden je nach Schwenkwinkel vor das Schar und/oder zur einen oder anderen Seite des Schars aufwirft. Dadurch wird bei Bodenbearbeitung vor allem in geneigtem Gelände erreicht, dass das Bodenleitelement den gelockerten Boden zu einer Seite hin, insbesondere hangaufwärts und somit vorzugsweise gegen die Erosionsrichtung, aufwerfen kann, die hangabwärts verläuft. Durch die Einrichtung gemäß der Erfindung kann dem Erosionsproblem somit aktiv entgegengewirkt werden. Bei vielfacher Tätigkeit dieser Art der Auflockerung des Bodens mittels der Bodenleiteinrichtung kann auf diese Weise der Boden aktiv hangaufwärts und dorthin aufgeworfen werden, wo er vor Einsetzen einer Erosion sich vormals befunden hat. Die Einrichtung gemäß der Erfindung ermöglicht somit einen entscheidenden Schritt zum Rückbau des Bodens und zur nachhaltigen Nutzung von Ackerböden. Gleichzeitig lassen sich dadurch optimale Bedingungen für das Wachstum von Kulturpflanzen schaffen. Bei allem ist die Einrichtung einfach und kostengünstig und für vielfältige Aufgaben einsetzbar, z. B. auch für eine dammförmige streifenweise Bodenbearbeitung, wie sie z. B. für das Setzen von Spargel wünschenswert ist. Die Einrichtung gemäß der Erfindung macht eine solche dammförmige Bodenbearbeitung möglich, ohne dass es hierbei irgendwelcher besonderer Spezialgeräte bedarf, die sonst hierfür bereitgehalten werden und zum Einsatz gebracht werden müssen.

Bei einer vorteilhaften Ausführungsform ist vorgesehen, dass die Bodenleiteinrichtung auf jeder Seite des Haltearms mindestens ein flächiges Bodenleitelement aufweist, wobei die beiden Bodenleitelemente unter einem Winkel in der Größenordnung von etwa 45° bis 90° zueinander verlaufen und vorzugsweise fest miteinander verbunden sind oder in Bezug zueinander selbstständig sind, in Bezug auf den Haltearm symmetrisch angeordnet sind und gegen die Fahrtrichtung nach hinten schräg gestellt sind.

Vorteilhaft kann es ferner sein, wenn die Bodenleiteinrichtung derart schwenkbetätigbar ist, dass in einer ersten Schwenkstellung ein Bodenleitelement auf einer Seite in Bezug auf den Haltearm schräg ausgestellt und aktiv ist und das Bodenleitelement auf der anderen Seite in Bezug auf den Haltearm an diesen flächig angelegt und inaktiv daran abgestützt ist, und dass in einer zweiten Schwenkstellung die Verhältnisse hinsichtlich der Bodenleitelemente vertauscht sind. Die Bodenleiteinrichtung kann somit um die genannte Achse so geschwenkt werden, dass ein Bodenleitelement in Querrichtung absteht und dabei unter einem Winkel von z. B. etwa 45° in Bezug auf den Haltearm zur Seite ausgestellt ist. Diese Position des einen Bodenleitelements kann z. B. durch Arretierung gesichert sein. Das andere Bodenleitelement kann dabei etwa parallel zur Breitseite des Haltearms verlaufen und je nach Schwenklagerung und sonstiger Gestaltung an der Breitseite des Haltearms anliegen und abgestützt sein. Dieses Bodenleitelement verläuft dann z. B. mit seiner Fläche ausgerichtet in Fahrtrichtung und kann bei der Lockerung des Bodens gegen den entstehenden Seitendruck abstützen. Dadurch wird ein Arbeiten hangaufwärts dergestalt möglich, dass das eine Bodenleitelement den gelockerten Boden zu einer Seite des Schars und dabei zur Seite hangaufwärts und vorzugsweise gegen die Erosionsrichtung aufwirft. Vorteilhaft kann es auch sein, wenn die Bodenleitelemente relativ zueinander schwenkverstellbar sind und damit unabhängig voneinander verstellt werden können.

Von Vorteil kann es sein, wenn die Bodenleiteinrichtung in den jeweiligen beiden Schwenkstellungen und/oder in beliebigen anderen Schwenkstellungen arretierbar ist.

Eine weitere vorteilhafte Ausführungsform sieht vor, dass an der Bodenleiteinrichtung zur Schwenkbetätigung eine mittels eines Stellantriebes, z. B. in Gestalt eines druckmittelbetriebenen Arbeitszylinders oder eines Motors oder eines elektromagnetischen oder magnetischen Antriebes, jeweils mit nachgeschaltetem Übertragungsmittel, wie Getriebe, Hebel od. dgl., schwenkverstellbare Welle angreift. Die Welle kann mittels Lagern am Haltearm in Axialrichtung und schwenkverstellbar um die Achse gehalten sein. Dabei kann die Welle als kurzes oder langes stangenförmiges Element gestaltet sein, das sich je nach Gestaltung auch zumindest über die Länge des Haltearms oder sogar über diese hinaus erstrecken kann. Dabei kann an dem Ende der Welle, das der Bodenleiteinrichtung gegenüberliegt, ein Stellantrieb angreifen, bei dem es sich um ein dem Durchschnittsfachmann geläufiges beliebiges Antriebsmittel handeln kann, z. B. um einen Drehantrieb oder um einen translatorisch arbeitenden Arbeitszylinder, wobei bedarfsweise diesen Antrieben ein Übertragungsmittel in Form z. B. eines Getriebes, einer Hebelanordnung od. dgl. nachgeschaltet sein kann.

Eine weitere vorteilhafte Ausführungsform sieht vor, dass die Welle als Hohlwelle und zum Zuführen von festen oder flüssigen Stoffen, insbesondere von Saatgut, Düngemittel od. dgl., durch diese hindurch bis zur Bodenleiteinrichtung ausgebildet ist. In einem solchen Fall kann es von Vorteil sein, wenn das z. B. obere Ende der Hohlwelle offen ist für die dortige Einleitung von festen oder flüssigen Stoffen genannter Art.

Eine weitere vorteilhafte Ausführungsform sieht vor, dass die Hohlwelle auf dem Bereich, der sich längs der Unterseite jedes Bodenleitelements der Bodenleiteinrichtung erstreckt, Durchlässe für den Auslass von festen oder flüssigen Stoffen, insbesondere von Saatgut, Düngemittel od. dgl., unterhalb dieser Unterseite aufweist, die von dem hinter dem Bodenleitelement abfallenden Bodenmaterial bedeckt werden können. Durch die Hohlwelle hindurch geleitete Stoffe können damit mit Vorteil unterhalb des jeweiligen Bodenleitelements abgegeben und verteilt werden. Der hinter dem Bodenleitelement abfallende Boden bedeckt dann die auf diese Weise ausgebrachten Stoffe. Die Durchlässe dienen in einfacher Weise dem Auslass solcher Stoffe, z. B. von Saatgut, Düngemittel od. dgl., das bedarfsweise auch mit Druck durch die Hohlwelle und durch die jeweiligen Durchlässe geleitet werden kann. Aufgrund der Anordnung der Durchlässe können durch diese abgegebene Stoffe von dem hinter dem Bodenleitelement abfallenden Bodenmaterial bedeckt werden.

Eine weitere vorteilhafte Ausführungsform sieht vor, dass die Hohlwelle im Bereich der Durchlässe im Inneren eine relativ zur Hohlwelle feststehende Sperrwand enthält, mittels der in einer Schwenkstellung der mindestens eine Durchlass unterhalb des schräg ausgestellten und aktiven Bodenleitelements freigebbar ist, während der mindestens eine andere Durchlass verschließbar ist, der dem auf der anderen Seite des Haltearms befindlichen, inaktiven Bodenleitelement zugeordnet ist, und in der anderen Schwenkstellung umgekehrt. Dies hat den Vorteil, dass gleichzeitig mit der Schwenkverstellung der Bodenleiteinrichtung der dem aktiven Bodenleitelement zugeordnete mindestens eine Auslass gleichzeitig geöffnet wird und der dem inaktiven anderen Bodenleitelement zugeordnete mindestens eine Auslass dabei selbsttätig geschlossen wird.

In vorteilhafter Weiterbildung der Einrichtung gemäß der Erfindung ist vorgesehen, dass mehrere Lockerungsschare vorgesehen sind, die jeweils einen eigenen Stellantrieb für die Schwenkverstellung der Bodenleitelemente aufweisen. Mehrere derartige Lockerungsschare können in einer Reihe oder in mehreren hintereinander folgenden Reihen vorgesehen und an einem Rahmen befestigt sein, wobei die Lockerungsschare in festen oder verstellbaren Querabständen angeordnet sein und feststellbar sein können. Vielfältige Gestaltungsmöglichkeiten für die Anordnung derartiger gleichartiger Lockerungsschare liegen im Rahmen der Erfindung, z. B. auch solche, dass nicht nur eine Reihe sondern mehrere Reihen von quer zur Fahrtrichtung beabstandeten Lockerungsscharen vorgesehen sein können. Hierbei können die Lockerungsschare einer Reihe in Bezug auf die Lockerungsschare der anderen, z. B. der nächstfolgenden Reihe mit Querabstand am Rahmen angeordnet sein. Dieser Querabstand kann auch verstellbar sein.

Eine weitere vorteilhafte Ausführungsform sieht vor, dass am Rahmen z. B. in einer vorderen Reihe mehrere Lockerungsschare mit gleichen Abständen in Querrichtung voneinander angeordnet sind. In einer dahinter folgenden weiteren Reihe sind wiederum insbesondere gleichartige Lockerungsschare angeordnet, z. B. vier Lockerungsschare, ebenfalls mit gleichen Querabständen voneinander. Die Lockerungsschare der vorderen ersten Reihe sind in Querrichtung derart beabstandet, dass z. B. jedes Lockerungsschar den Boden mit einem vorgegebenen, durch den Querabstand bestimmten Strichabstand zu einer Seite wirft, wenn bei diesen das jeweilige gleiche Bodenleitelement schräg ausgestellt und aktiv ist. Bei der nächstfolgenden Reihe kann die Versatzbreite der Lockerungsschare in Querrichtung ebenfalls einem Strichabstand entsprechen, so dass von der zweiten Reihe der Lockerungsschare ein sich an die Strichbreite der vorderen Lockerungsschare anschließender Bodenaufwurf erfolgt. Dies führt dazu, dass der Boden über die gesamte Breite mittels der Einrichtung zu einer Seite hin gelockert und aufgeworfen wird. Die einzelnen Lockerungsschare jeder Reihe, die alle gleichartig sein können, können in festen Querabständen voneinander angeordnet sein. Stattdessen ist aber auch eine Anordnung mit verstellbaren Querabständen möglich. Jedes einzelne Lockerungsschar kann hierbei einen eigenen Stellantrieb für die Schwenkverstellung der jeweiligen Bodenleiteinrichtung aufweisen. Sollte es aus irgendwelchen Gründen wünschenswert sein, können die Lockerungsschare einer Reihe oder auch einzeln innerhalb der Reihe hinsichtlich der Schwenkverstellung bei der Bodenleiteinrichtung voneinander abweichend verstellt werden. Eine große Variationsbreite ist somit erreicht.

Eine weitere vorteilhafte Ausführungsform sieht vor, dass am Rahmen unmittelbar oder mittelbar über einen dazwischen befindlichen Halterahmen eine Nachlaufeinrichtung fest aber lösbar und auswechselbar angebracht ist, die längs einer Reihe quer zur Fahrtrichtung angeordnete Nachlaufelemente, z. B. Rollen, Walzen, Räder, Doppelrillenräder od. dgl., aufweist, die am Boden abstützen und den zur einen oder anderen Seite aufgeworfenen Boden vorzugsweise ganzflächig rückverfestigen. Derartige Nachlaufeinrichtungen werden auch als Packer bezeichnet. In vorteilhafter Weise sind diese Nachlaufeinrichtungen mit mechanischen, druckmittelbetriebenen, motorischen od. dgl. Mitteln zur Höhenverstellung und/oder zur horizontalen Querverstellung ausgestattet, z. B. zur Querverstellung um das Maß des Strichabstandes, d. h. der Arbeitsbreite eines Lockerungsschars zur einen bzw. zur anderen Seite. Diese Mittel zur Höhenverstellung und/oder Querverstellung können z. B: schwenkbetätigbare Hebel oder geradlinig wirkende Stellglieder, wie translatorisch wirkende Stellantriebe, Schraubelemente od. dgl., aufweisen. Über diese Mittel z. B. zur Querverstellung ist es möglich, bei der Einrichtung die Nachlaufeinrichtung zu einer Seite nach links oder nach rechts bedarfsweise um das Maß des Strichabstandes, d. h. die Arbeitsbreite, eines Lockerungsschars horizontal zu verstellen, so dass der nach links bzw. nach rechts aufgeworfene Boden ganzflächig mittels der Nachlaufeinrichtung rückverfestigt wird. Bei der Rückverfestigung erfolgt auch die Sicherung von ausgebrachten festen bzw. flüssigen Stoffen, insbesondere von Saatgut, Düngemittel od. dgl., die von hinter dem jeweiligen Bodenleitelement der Bodenleiteinrichtung abfallendem Bodenmaterial bedeckt werden, das mittels der Nachlaufeinrichtung rückverfestigt wird.

Eine weitere vorteilhafte Ausführungsform sieht vor, dass jedes Lockerungsschar über eine Parallelogrammlenkerbaueinheit am Rahmen gelenkig gehalten ist und mittels eines nachlaufenden Stützrades am Boden abgestützt ist und der Bodenkontur folgt. Die Parallelogrammlenkerbaueinheit kann einen druckmittelbetriebenen Arbeitszylinder aufweisen sowie einen gelenkig am Rahmen angreifenden, darunter verlaufenden Hebel. Der Arbeitszylinder und der Hebel können beide an einem etwa vertikal gerichteten Abschnitt des Haltearms angelenkt sein, so dass durch Betätigung des Arbeitszylinders der Anstellwinkel des Lockerungsschars, in Fahrtrichtung gesehen, verstellt werden kann. Das Stützrad kann z. B. gegen eine federnde Haltekraft, z. B. eine Feder, im Bereich seiner Anlenkung an den Haltearm frei schwenkbeweglich sein und sich dadurch z. B. an Unebenheiten od. dgl. Unregelmäßigkeiten des Bodens selbsttätig anpassen. An einer das Stützrad tragenden Gabel kann ein z. B. druckmittelbetätigter Arbeitszylinder angreifen, der die Abstützung der Gabel und damit des Stützrades bewirkt und eine Winkelverstellung der Gabel mit Stützrad möglich macht. Mittels des Stützrades kann die Arbeitstiefe des Lockerungsschars eingestellt und präzise eingehalten werden.

Weitere Einzelheiten und Vorteile der Erfindung ergeben sich aus der nachfolgenden Beschreibung.

Die Erfindung ist nachfolgend anhand von in den Zeichnungen gezeigten Ausführungsbeispielen näher erläutert. Es zeigen:
- Fig. 1: eine schematische Seitenansicht einer Einrichtung zur landwirtschaftlichen Bearbeitung von Böden, gemäß einem ersten Ausführungsbeispiel,
- Fig. 2: einen schematischen Schnitt entlang der Linie II-II in Fig. 1,
- Fig. 3: einen schematischen Schnitt entlang der Linie III-III in Fig. 1,
- Fig. 4a: eine schematische Vorderansicht eines Teils einer Einrichtung zur landwirtschaftlichen Bearbeitung von Böden gemäß einem zweiten Ausführungsbeispiel,
- Fig. 4b: eine schematische Vorderansicht ähnlich derjenigen in Fig. 4a einer Einrichtung gemäß einem dritten Ausführungsbeispiel,
- Fig. 5: eine schematische Draufsicht einer Einrichtung zur landwirtschaftlichen Bearbeitung von Böden gemäß einem vierten Ausführungsbeispiel,
- Fig. 6a: eine schematische rückseitige Ansicht einer Nachlaufeinrichtung gemäß einem Ausführungsbeispiel für die Einrichtung in Fig. 5,
- Fig. 6b: eine schematische rückseitige Ansicht einer Nachlaufeinrichtung gemäß einem anderen Ausführungsbeispiel für die Einrichtung in Fig. 5,
- Fig. 7: eine schematische Seitenansicht eines Lockerungsschars für die Einrichtung in Fig. 5,
- Fig. 8: eine schematische Draufsicht eines vorderen Endes einer Einrichtung gemäß einem fünften Ausführungsbeispiel.

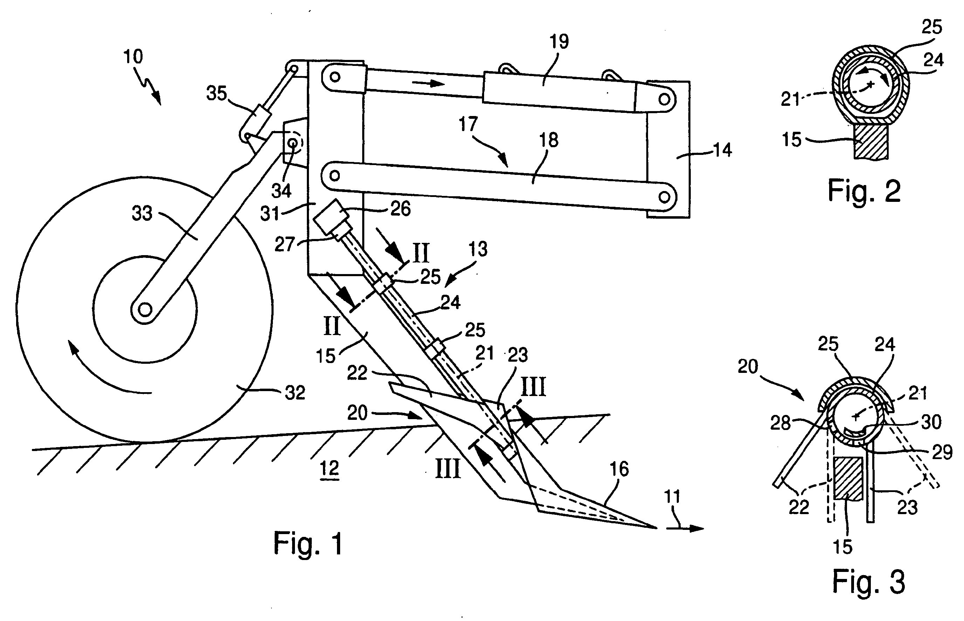

In Fig. 1 ist in vereinfachter schematischer Darstellung ein erstes Ausführungsbeispiel einer Einrichtung 10 gezeigt, die zur streifenweisen landwirtschaftlichen Bearbeitung von Böden ausgebildet ist, insbesondere für die Lockerung von Böden. Hierzu wird die Einrichtung 10 in Richtung des Pfeiles 11 über den Boden 12 bewegt. Die Einrichtung 10 weist ein Lockerungsschar 13, auch Lockerungsstiel genannt, auf, das an einem Rahmen 14 gehalten und schräg nach vorn in Richtung des Pfeiles 11 und der Fahrtrichtung angestellt ist.

Das Lockerungsschar 13 weist einen Haltearm 15 und am freien Ende dieses ein Schar 16 auf.

Einrichtungen 10 dieser Art werden zum Lockern von Böden eingesetzt. Die einzelnen Lockerungsschare 13 sind in Fahrtrichtung gemäß Pfeil 11 ausgerichtet, wobei mehrere solche Lockerungsschare 13 in einer Reihe oder in mehreren, in Fahrtrichtung aufeinanderfolgenden Reihen mit Abstand, quer zur Fahrtrichtung gemäß Pfeil 11 betrachtet, vorhanden sind. Diese einzelnen Lockerungsschare 13 besitzen die Eigenschaft, dass durch diese der Boden 12 streifenweise bearbeitet wird und die dabei aufgeworfene Erde auf der Oberfläche mehr oder weniger verteilt wird. Vor allem in geneigtem Gelände findet ein Bodenabtrag statt. Der Boden wird hierbei ständig nur talwärts bewegt. Wind und Wasser wirken in gleicher Weise noch erschwerend dazu. Die Folgen sind Erosion und dadurch bedingte Schäden. Eine sinnvolle Nutzung des Bodens wird deswegen zum Problem oder gar unmöglich, weil der ganze Mutterboden bereits zu Tal gewandert ist.

Durch die erfindungsgemäße Einrichtung 10 wird einem solchen Erosionsproblem aktiv entgegengewirkt. Hierzu ist die Einrichtung 10 so gestaltet, dass am Haltearm 15 auf dessen Vorderseite und in Abstand oberhalb des Schars 16 mindestens eine flächige Bodenleiteinrichtung 20 um eine Achse 21 schwenkbar gelagert ist, welche auf der Vorderseite des Haltearms 15, in Fahrtrichtung gemäß Pfeil 11 betrachtet, und längs des Haltearms 15 verläuft. Die Bodenleiteinrichtung 20 ist um die Achse 21 derart schwenkbetätigbar und beliebig arretierbar, dass die Bodenleiteinrichtung 20 den beim Lockern aufgeworfenen Boden je nach Schwenkwinkel vor das Schar 16 und/oder zur einen oder anderen Seite des Schars 16 aufwirft. Die Bodenleiteinrichtung 20 kann um die Achse 21 nach Bedarf und anstehender Bearbeitung beliebig geschwenkt und in der jeweiligen Schwenkstellung arretiert werden. Insbesondere aus Fig. 3 ist ersichtlich, dass die Bodenleiteinrichtung 20 auf jeder Seite des Haltearms 15 mindestens ein flächiges Bodenleitelement 22, 23 aufweist. Die beiden Bodenleitelemente 22, 23 verlaufen unter einem Winkel in der Größenordnung von z.B. etwa 45° bis 90° zueinander, wobei die Bodenleitelemente 22, 23 vorzugsweise fest miteinander verbunden sind. Sie sind in Bezug auf den Haltearm 15 bzw. die Achse 21 symmetrisch angeordnet und gegen die Fahrtrichtung gemäß Pfeil 11 nach hinten schräg gestellt, wie für das eine Bodenleitelement 22 aus Fig. 1 ersichtlich ist.

Bei der Darstellung in Fig. 1 und 3 der Einrichtung 10 ist die Bodenleiteinrichtung 20 um die Achse 21 in Fig. 3 im Uhrzeigersinn derart geschwenkt, dass das eine Bodenleitelement 22, in Fig. 3 das linke Bodenleitelement 22, in Querrichtung absteht und dabei unter einem Winkel von beispielsweise etwa 45° in Bezug auf den Haltearm 15 zur Seite ausgestellt ist. Diese Position der Bodenleiteinrichtung 20 ist z.B. durch Arretierung gesichert. Das andere Bodenleitelement 23 verläuft etwa parallel zur Breitseite des Haltearmes 15, wobei je nach Schwenklagerung und sonstiger Gestaltung dieses Bodenleitelement 23 an der Breitseite des Haltearms 15 anliegen kann und abgestützt sein kann. Dieses Bodenleitelement 23 verläuft dann mit seiner Fläche ausgerichtet in Fahrtrichtung und kann bei der Lockerung des Bodens gegen den entstehenden Seitendruck abstützen. Dadurch wird ein Arbeiten hangaufwärts dergestalt möglich, dass das Bodenleitelement 22 den gelockerten Boden zu einer Seite des Schars 16 und dabei zur Seite hangaufwärts aufwirft. Der Boden wird von dem Bodenleitelement 22 beim Lockern in Fig. 3 zur linken Seite hin bewegt, insbesondere hangaufwärts und somit vorzugsweise gegen die Erosionsrichtung, die hangabwärts verläuft. Durch die Einrichtung 10 dieser Art kann dem Erosionsproblem aktiv entgegengewirkt werden. Der beim Lockern aufgeworfene Boden wird von dem einen Bodenleitelement 22 entgegen der Erosionsrichtung bewegt. Bei vielfacher Tätigkeit dieser Art der Auflockerung des Bodens mittels der Bodenleiteinrichtung 20 kann auf diese Weise der Boden aktiv hangaufwärts und dorthin aufgeworfen werden, wo er vor Einsetzen einer Erosion sich einmal befunden hat. Die Einrichtung 10 gemäß der Erfindung ermöglicht somit einen entscheidenden Schritt zur nachhaltigen Nutzung von Ackerböden.

Man erkennt, dass die Bodenleiteinrichtung 20 derart schwenkbetätigbar ist, dass in einer ersten Schwenkstellung, wie sie z.B. in Fig. 1 und 3 gezeigt ist, ein Bodenleitelement 22 auf einer Seite in Bezug auf den Haltearm 15 schräg ausgestellt und aktiv ist und das Bodenleitelement 23 auf der anderen Seite in Bezug auf den Haltearm 15 an diesen z.B. etwa flächig angelegt und inaktiv daran abgestützt ist, wobei in einer zweiten Schwenkstellung, wie diese in Fig. 3 mit gestrichelten Linien angedeutet ist, die Verhältnisse hinsichtlich der Bodenleitelemente 22, 23 vertauscht sind. In den jeweiligen beiden Schwenkstellungen und/oder auch in beliebigen anderen Schwenkstellungen ist die Bodenleiteinrichtung 20 arretierbar. Zur Schwenkbetätigung um die Achse 21 kann an der Bodenleiteinrichtung 20 eine schwenkverstellbare Welle 24 angreifen, die mittels lediglich angedeuteter Lager 25 am Haltearm 15 in Axialrichtung und schwenkverstellbar um die Achse 21 gehalten ist. Ganz allgemein kann die Welle 24 als kurzes oder langes stangenförmiges Element gestaltet sein, das z.B. in der kurzen Ausführungsform dem in Fig. 1 nicht sichtbaren unteren Lager 25 für die Bodenleiteinrichtung 20 benachbart und so angeordnet sein kann, dass daran für die Schwenkverstellung der Bodenleiteinrichtung 20 ein geeigneter Stellantrieb angreifen kann. In Fig. 1 ist schematisch dargestellt, dass die Welle 24 sich zumindest über die Länge des Haltearms 15 und sogar über diese hinaus erstreckt. Dabei ist allein als Beispiel gezeigt, dass an der Welle 24 an dem Ende, das der Bodenleiteinrichtung 20 gegenüber liegt, ein schematisch angedeuteter Stellantrieb 26 angreift. Bei diesem Stellantrieb 26 kann es sich z. B. um einen druckmittelbetriebenen oder elektromagnetischen oder magnetischen Motor oder stattdessen um einen druckmittelbetriebenen Arbeitszylinder handeln, jeweils mit nachgeschaltetem Übertragungsmittel 27, wie z.B. Getriebe, Hebel od.dgl.

Von besonderem Vorteil ist es, wenn die Welle 24 so, wie in Fig. 1 bis 3 gezeigt ist, als Hohlwelle ausgebildet ist, die durchgängig vorn in Fig. 1 oberen bis hin zum unteren Ende ist und zum Zuführen von festen oder flüssigen Stoffen, insbesondere von Saatgut, Düngemittel od. dgl., durch die Hohlwelle bis zur Bodenleiteinrichtung 20 ausgebildet ist. In diesem Fall ist der Stellantrieb 26 mit Übertragungsmittel 27 so gestaltet, dass das dortige obere Ende der hohlen Welle 24 offen ist für die dortige Einleitung von festen oder flüssigen Stoffen genannter Art. In diesem Fall kann durch die hohle Welle 24 hindurch z.B. Saatgut, Düngemittel od.dgl. eingeleitet und im Bereich der Bodenleiteinrichtung 20, vorzugsweise unterhalb des jeweiligen Bodenleitelements 22, 23, abgegeben und verteilt werden. Der hinter dem jeweiligen Bodenleitelement 22, 23 abfallende Boden bedeckt dann die auf diese Weise ausgebrachten genannten Stoffe. Hierbei kann es insbesondere vorteilhaft sein, wenn die im Inneren hohle Welle 24 auf dem Bereich, der sich längs der Unterseite jedes Bodenleitelements 22, 23 der Bodenleiteinrichtung 20 erstreckt, in Fig. 3 angedeutete Durchlässe 28, 29 aufweist, die sich unterhalb der Unterseite des jeweiligen Bodenleitelements 22 bzw. 23 befinden. Die Durchlässe 28, 29 dienen dem Auslass von festen oder flüssigen Stoffen, insbesondere von Saatgut, Düngemittel od. dgl., das bedarfsweise auch mit Druck durch die hohle Welle 24 und durch den jeweiligen Durchlass 28, 29 geleitet wird. Bei der in Fig. 3 gezeigten Einstellung der Bodenleiteinrichtung 20 derart, dass das eine Bodenleitelement 22 aktiv ist, ist der Durchlass 28 unterhalb der Unterseite dieses Bodenleitelements 22 offen für den Auslass der genannten Stoffe. Die aus der mindestens einen Durchlassöffnung 28 abgegebenen Stoffe, z.B. Saatgut, Düngemittel, werden von dem hinter dem Bodenleitelement 22 abfallenden Bodenmaterial bedeckt.

Das Öffnen bzw. Schließen der Durchlässe 28, 29 wird bei der Schwenkbetätigung der Bodenleiteinrichtung 20 um die Achse 21 gesteuert. Hierzu ist in Fig. 3 angedeutet, dass die hohle Welle 24 im Bereich der Durchlässe 28, 29 im Inneren eine relativ zur Welle 24 feststehende Sperrwand 30 enthält. Die Sperrwand 30 einerseits und die Durchlässe 28, 29 andererseits sind relativ zueinander so angeordnet, dass in der einen in Fig. 3 gezeigten Schwenkstellung der Bodenleiteinrichtung 20 der mindestens eine Durchlass 28 unterhalb des schräg ausgestellten und aktiven Bodenleitelements 22 freigegeben ist, während der andere, mindestens eine Durchlass 29, der dem auf der anderen Seite des Haltearms 15 befindlichen inaktiven Bodenleitelement 23 zugeordnet ist, mittels der Sperrwand 30 verschlossen ist, so dass an dieser Stelle kein Stoff, der in die Hohlwelle 24 eingespeist wird, austreten kann. In einer anderen Schwenkstellung der Bodenleiteinrichtung 20, z. B. einer solchen, die in Fig. 3 gestrichelt angedeutet ist, sind die Verhältnisse umgekehrt. Dann ist der Durchlass 28 von der Sperrwand 30 verschlossen, während der andere Durchlass 29 unterhalb des Bodenleitelements 23 für den Auslass geöffnet ist.

Beim ersten Ausführungsbeispiel gemäß Fig. 1 ist das Lockerungsschar 13 über eine Parallelogrammlenkerbaueinheit 17 am Rahmen 14 gelenkig gehalten. Die Parallelogrammlenkereinheit 17 weist z. B. einen gelenkig am Rahmen 14 angreifenden unteren Hebel 18 und in Abstand oberhalb dieses einen angedeuteten druckmittelbetriebenen Arbeitszylinder 19 auf, der ebenfalls am Rahmen 14 angelenkt ist. Dieser und der Hebel 18 sind mit dem anderen Ende an einem z. B. etwa vertikal gerichteten Abschnitt 31 des Haltearms 15 angelenkt, so dass durch Betätigung des Arbeitszylinders 19 der Anstellwinkel des Lockerungsschars 13, in Fahrtrichtung gemäß Pfeil 11 gesehen, verstellt werden kann.

Das Lockerungsschar 13 ist ferner mittels eines nachlaufenden Stützrades 32 am Boden 12 abgestützt und kann mittels des Stützrades 32 der Kontur des Bodens 12 folgen. Das Stützrad 32 ist z. B. in einer Gabel 33 aufgenommen, die am Abschnitt 31 im Bereich des Gelenkes 34 schwenkbeweglich gehalten ist. Das Stützrad 32 kann z. B. gegen eine federnde Haltekraft, z. B. eine Feder, im Gelenk 34 frei schwenkbeweglich sein und sich dadurch z. B. an Unebenheiten od. dgl. Unregelmäßigkeiten des Bodens 12 selbsttätig anpassen. In Fig. 1 ist schematisch angedeutet, dass an der Gabel 33 ein z. B. druckmittelbetätigter Arbeitszylinder 35 angreifen kann, der die Abstützung der Gabel 33 und damit des Stützrades 32 bewirkt und eine Winkelverstellung der Gabel 33 mit Stützrad 32 möglich macht. Mittels des Stützrades 32 kann die Arbeitstiefe des Lockerungsschars 13 eingestellt und präzise eingehalten werden.

In Fig. 1 bis 3 ist schematisch ein Lockerungsschar 13 in der zuvor beschriebenen Gestaltung dargestellt. Es versteht sich, dass von dieser Art Lockerungsschar 13 auch mehrere vorgesehen sein können, wobei diese hinsichtlich der Bodenleiteinrichtung 20 jeweils einen eigenen Stellantrieb analog dem Stellantrieb 26 mit Übertragungsmittel 27 aufweisen können. Mehrere derartige Lockerungsschare 13 können, quer zur Fahrtrichtung gemäß Pfeil 11 betrachtet, auch zu einer Einheit zusammengefasst sein, z. B. mittels am jeweiligen Rahmen 14 fest angreifender Verbindungsmittel. Hierbei können die quer zur Fahrrichtung gemäß Pfeil 11 in Abstand voneinander angeordneten einzelnen Lockerungsschare 13 in festen Querabständen oder auch in verstellbaren Querabständen angeordnet sein und feststellbar sein. Es versteht sich, dass vielfältige Gestaltungsmöglichkeiten für die Anordnung mehrerer gleichartiger Lockerungsschare 13 im Rahmen der Erfindung liegen, z. B. auch solche, dass nicht nur eine Reihe sondern mehrere Reihen von quer zur Fahrtrichtung gemäß Pfeil beabstandeten Lockerungsscharen 13 vorgesehen sind. Hierbei können die Lockerungsschare 13 einer Reihe in Bezug auf die Lockerungsschare 13 z. B. einer nächstfolgenden Reihe mit Querabstand platziert sein. Dieser Querabstand kann auch verstellbar sein.

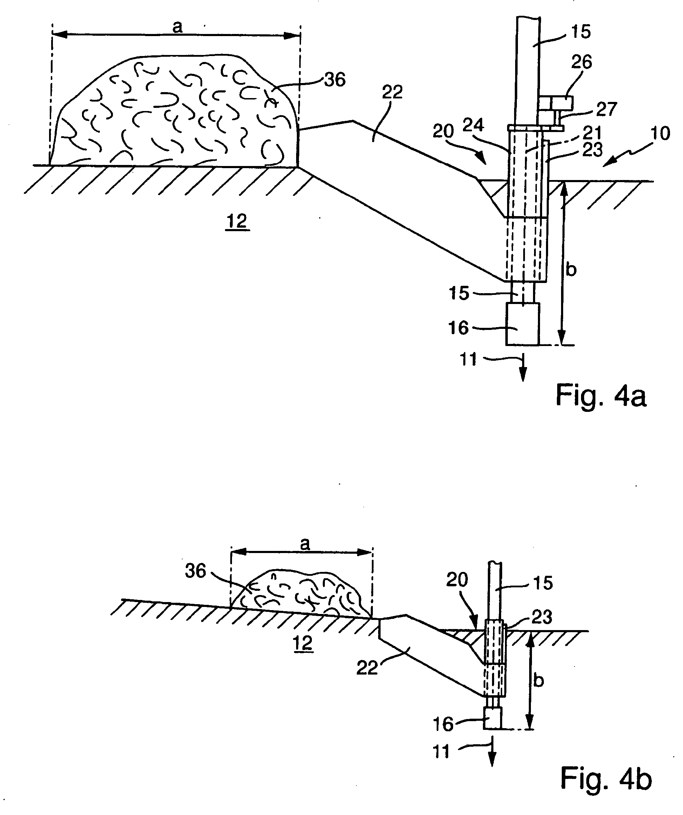

Zur Verdeutlichung der Funktionsweise der Einrichtung 10 ist auf Fig. 4a und 4b zu verweisen, wobei in diesen für die gleichen Teile wie in Fig. 1 bis 3 gleiche Bezugszeichen verwendet sind, so dass zur Vermeidung von Wiederholungen dadurch auf die Beschreibung des Ausführungsbeispieles in Fig. 1 bis 3 verwiesen wird.

Bei dem in Fig. 4a gezeigten zweiten Ausführungsbeispiel ist dargestellt, dass die Einrichtung 10 zum Tieflockern des Bodens 12 ausgebildet ist, so dass eine große Eindringtiefe b in den Boden 12 möglich ist. Dementsprechend großflächig sind die beiden Bodenleitelemente 22, 23 der Bodenleiteinrichtung 20 beschaffen. Schematisch ist neben dem Bodenleitelement 22 und, in Fahrtrichtung gemäß Pfeil 11 betrachtet, hinter diesem ein Bodenauswurf 36 angedeutet, der einen breiten Strichabstand a hat. Durch die Ausladung und Fläche der Bodenleitelemente 22, 23 der Bodenleiteinrichtung 20 wird bei entsprechender Eindringtiefe b die Breite des Strichabstandes bestimmt. Man erkennt dies deutlich im Vergleich mit Fig. 4b. Bei diesem dritten Ausführungsbeispiel ist die Einrichtung 10 für eine geringere Eindringtiefe b vorgesehen. Demgemäß ist die Fläche und Ausladung des jeweils aktiven Bodenleitelements 22 bzw. bei anderer Schwenkwinkeleinstellung des Bodenleitelementes 23 kleiner bemessen. Dadurch ergibt sich hinsichtlich des beim Lockern aufgeworfenen Bodens 36 ein geringerer Strichabstand a. Die Einrichtung 10 gemäß Fig. 4b ist somit zum Flachlockern ausgebildet.

Bei der Einrichtung 10 gemäß Fig. 4a ist eine Abwandlung im Vergleich zu dem ersten Ausführungsbeispiel gemäß Fig. 1 bis 3 dargestellt. Die um die Achse 21 schwenkverstellbare Bodenleiteinrichtung 20 hat in Fig. 4a eine relativ kurze innen hohle Welle 24, die in geringem Abstand von der Bodenleiteinrichtung 20 endet und an diesem Ende einen schematisch angedeuteten Stellantrieb 26 mit nachgeschaltetem Übertragungsmittel 27 aufweist. Der Stellantrieb 26 kann z. B. ein druckmittelbetriebener Motor sein, der über ein angetriebenes Zahnrad ein solches am Ende der Welle 24 antreibt. Stattdessen ist auch ein druckmittelbetriebener Arbeitszylinder oder ein elektromagnetischer oder magnetischer Antrieb, jeweils mit nachgeschaltetem Übertragungsmittel 27, z. B. in Form eines Getriebes, einer Hebeleinrichtung od. dgl. möglich.

Während bei den Ausführungsbeispielen in Fig. 1 bis 4b ein Stellantrieb 26 auf die in Form einer Einheit gestaltete Bodenleiteinrichtung 20 mit Bodenleitelementen 22 und 23 arbeitet, versteht es sich, dass auch für jedes Bodenleitelement 22 sowie 23 eine eigene Schwenklagerung und ein eigener Stellantrieb möglich sind. Dies hat den Vorteil, dass die Bodenleitelemente 22 und 23 zueinander winkelverstellbar sind und durch entsprechende Schwenkverstellung bei Bedarf so eingestellt werden können, dass z. B. ein Bodenleitelement 22 auf einen geringeren Ausstellwinkel oder bei Bedarf auf einen anderen größeren Ausstellwinkel eingestellt werden kann, während z. B. das andere Bodenleitelement 23 die in Fig. 4a und 4b gezeigte Ausrichtung ihrer Fläche etwa parallel zur Breitseite des Haltearms 15 haben kann. Sollte der Bedarf bestehen, kann in solchen Fällen aber auch das andere Bodenleitelement 23 relativ zum Bodenleitelement 22 verstellt werden. Verwirklicht wird diese Schwenkbeweglichkeit der Bodenleitelemente 22, 23 relativ zueinander z. B. durch ineinander angeordnete Wellen, z. B. Hohlwellen, mit jeweils endseitigem Stellantrieb analog dem Stellantrieb 26 mit Übertragungsmittel 27, wobei z. B. die eine, innere Welle für die Schwenkverstellung des einen Bodenleitelements 23 und die andere, z. B. äußere hohle Welle für die Schwenkverstellung des anderen Bodenleitelements 22 zuständig ist.

Aus Fig. 4a und 4b erschließt sich, dass die erfindungsgemäße Einrichtung 10 auch eine streifenweise dammförmige Bodenbearbeitung ermöglicht. Hierzu werden die Bodenleitelemente 22, 23 z. B. von zwei mit Querabstand angeordneten Lockerungsscharen 13 derart gegeneinander verschwenkt, dass eine Bodenleiteinrichtung 20 den Boden nach links und die benachbarte andere Bodenleiteinrichtung 20 den Boden nach rechts wirft. Eine derartige dammförmige Gestaltung des Bodens ist z. B. für das Setzen von Spargel wünschenswert. Die Einrichtung 10 macht eine solche dammförmige Bodenbearbeitung möglich, ohne dass es hierzu irgendwelcher besonderer Spezialgeräte bedarf, die sonst hierfür bereitgehalten werden und zum Einsatz gebracht werden müssen.

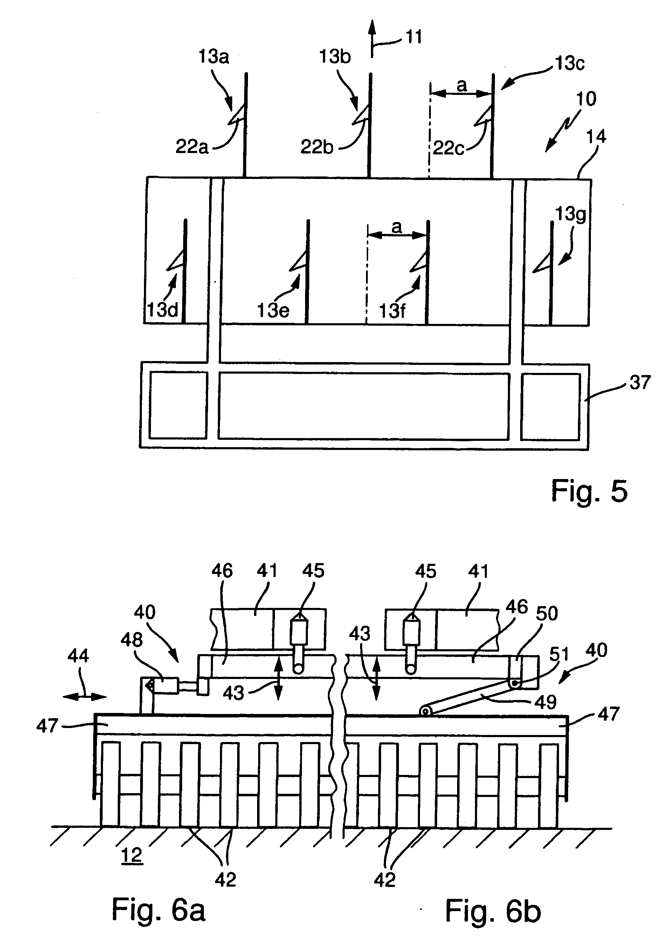

Bei dem in Fig. 5 gezeigten vierten Ausführungsbeispiel ist nur schematisch angedeutet, dass die Einrichtung 10 eine Mehrzahl von Lockerungsscharen 13 z. B. gleicher Ausbildung aufweist. Am Rahmen 14 sind z. B. in einer vorderen Reihe mit Abstand a mehrere Lockerungsschare, z. B. drei Lockerungsschare 13a, 13b und 13c, angeordnet. In einer dahinter folgenden weiteren Reihe sind wiederrum insbesondere gleichartige Lockerungsschare angeordnet, z. B. vier Lockerungsschare 13d, 13e, 13f, 13g. Die Lockerungsschare 13a, 13b sowie 13c der vorderen Reihe sind in Querrichtung derart beabstandet, dass z. B. jedes Lockerungsschar 13a, 13b und 13c den Boden mit einem Strichabstand a in Fig. 5 nach links wirft, da bei deren Bodenleiteinrichtung das linke Bodenleitelement 22a, 22b und 22c schräg ausgestellt und aktiv ist. Bei der hinteren Reihe sind die Lockerungsschare 13d, 13e, 13f und 13g in Bezug auf die vorderen Lockerungsschare 13a, 13b, 13c mit Querversatz angeordnet. Die Versatzbreite kann einem Strichabstand a entsprechen, so dass von der zweiten Reihe der Lockerungsschare ein sich in Querrichtung an die Strichbreite a der vorderen Lockerungsschare 13a, 13b und 13c anschließender Bodenaufwurf erfolgt. Dies führt insgesamt dazu, dass der Boden über die gesamte Breite in Fig. 5 mittels der Einrichtung 10 nach links gelockert und geworfen wird. Der Rahmen 14, der sämtliche Lockerungsschare der vorderen und nächstfolgenden Reihe trägt, ist seinerseits fest mit einem Tragrahmen 37 verbunden. Die einzelnen Lockerungsschare jeder Reihe, die alle gleichartig sind, sind z. B. in festen Querabständen angeordnet. Stattdessen ist auch eine Anordnung in verstellbaren Querabständen möglich, dergestalt, dass die einzelnen Lockerungsschare quer zur Fahrtrichtung gemäß Pfeil 11 in Bezug zueinander anders eingestellt und festgestellt werden können. Jedes einzelne Lockerungsschar der Einrichtung 10 gemäß Fig. 5 kann einen eigenen Stellantrieb für die jeweilige Bodenleiteinrichtung 20 aufweisen. Sollte es aus irgendwelchen Gründen wünschenswert sein, können die Lockerungsschare einer Reihe oder auch einzeln innerhalb der Reihe hinsichtlich der Schwenkstellung bei der Bodenleiteinrichtung 20 voneinander abweichend verstellt werden. Eine große Variationsbreite ist damit eröffnet.

In Fig. 6a und Fig. 6b sind jeweils Teile einer Nachlaufeinrichtung 40 schematisch dargestellt, wobei die jeweilige Nachlaufeinrichtung 40 unmittelbar oder mittelbar über einen dazwischen befindlichen Halterahmen 41 am Rahmen 14 oder Tragrahmen 37 gemäß Fig. 5 fest aber lösbar und auswechselbar angebracht werden kann.

Die jeweilige Nachlaufeinrichtung 40 weist längs einer Reihe quer zur Fahrtrichtung gemäß Pfeil 11 angeordnete Nachlaufelemente 42 auf, die z. B. aus Rollen, Walzen, Rädern, bekannten Doppelrillenrädern od. dgl. bestehen und die eine Abstützung am Boden 12 bewirken und ferner den mittels der Bodenleiteinrichtung 20 zur einen und/oder anderen Seite aufgeworfenen Boden vorzugsweise ganzflächig rückverfestigen. Derartige Nachlaufeinrichtungen 40 werden auch als Packer bezeichnet. In vorteilhafter Weise sind diese Nachlaufeinrichtungen 40 mit mechanischen, druckmittelbetriebenen, motorischen od. dgl. Mitteln zur Höhenverstellung gemäß Pfeil 43 und/oder zur horizontalen Querverstellung gemäß Pfeil 44 versehen, z. B. zur Querverstellung um das Maß des Strichabstandes a, d. h. der Arbeitsbreite eines Lockerungsschars gemäß Fig. 5 zur einen oder anderen Seite. Diese Mittel zur Höhenverstellung und/oder Querverstellung können z. B. schwenkbetätigbare Hebel oder geradlinig wirkende Stellglieder, wie translatorisch wirkende Stellantriebe, Schraubelemente od. dgl. aufweisen. In Fig. 6a und 6b ist angedeutet, dass als Mittel zur Höhenverstellung gemäß Pfeil 43 z. B. druckmittelbetriebene Arbeitszylinder 45 oder von Hand einstellbare Schraubglieder vorgesehen sind, die einerseits am Halterahmen 41 angreifen und andererseits an einem Träger 46, an dem die darunter befindliche Einheit 47 mit den Nachlaufelementen 42 gehalten ist. Bei dem Beispiel gemäß Fig. 6a ist als Mittel zur Querverstellung gemäß Pfeil 44 z. B. ein druckmittelbetriebener Arbeitszylinder 48 angedeutet, wobei auch jedes andere Stellelement für eine translatorische Verstellbewegung zum Einsatz kommen kann. Die Verbindungsmittel zwischen dem Träger 46 und der Einheit 47 sind aus Gründen der Übersichtlichkeit in Fig. 6a nicht gezeigt.

In Fig. 6b ist dargestellt, dass die Mittel z. B. zur Querverstellung gemäß Pfeil 44 z. B. durch einen Lenker 49 zwischen dem Träger 46 und der Einheit 47 gebildet sein können, wobei z. B. am Träger 46 ein angedeuteter Stellantrieb 50 gehalten ist, der eine Schwenkbetätigung des Lenkers 49 z. B. um die Achse 51 bewirkt. Bei diesem Ausführungsbeispiel führt eine Querverstellung der Nachlaufeinrichtung 40 auch zu einer Höhenverstellung. Statt des Lenkers 49 mit Stellantrieb 50 ist auch bei dieser Nachlaufeinrichtung 40 gemäß Fig. 6b jeder andere translatorisch zu Verstellzwecken auf die Einheit 47 wirkende Stellantrieb einsetzbar. Über diese Mittel zur Querverstellung gemäß Pfeil 44 ist es möglich, bei der Einrichtung 10, die über den Tragrahmen 37 mit der Nachlaufeinrichtung 40 gemäß Fig. 6a oder Fig. 6b starr, aber lösbar, verbunden ist, die Nachlaufeinrichtung 40 in der Darstellung nach links oder nach rechts bedarfsweise um die Arbeitsbreite a eines Lockerungsschars 13 in den Reihen gemäß Fig. 5 horizontal zu verstellen, so dass der nach links bzw. nach rechts aufgeworfene Boden ganzflächig mittels der Nachlaufeinrichtung 40 rückverfestigt wird. Bei der Rückverfestigung erfolgt auch die Sicherung von ausgebrachten festen bzw. flüssigen Stoffen, insbesondere von Saatgut, Düngemittel od. dgl., die vorn hinter dem jeweiligen Bodenleitelement der Bodenleiteinrichtung 20 abfallenden Bodenmaterial bedeckt werden, das mittels der Nachlaufeinrichtung 40 rückverfestigt wird.

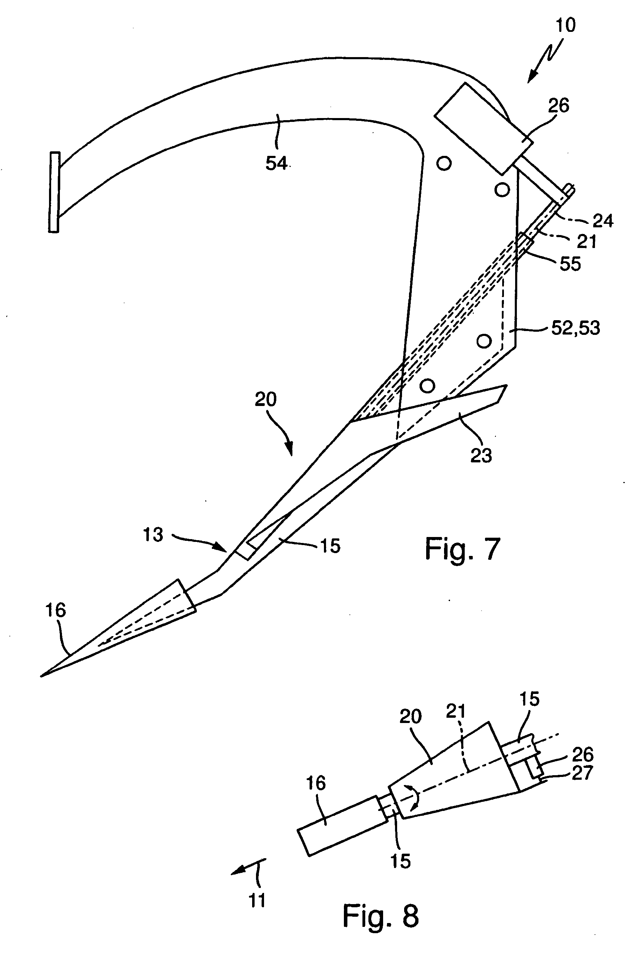

Bei dem in Fig. 7 dargestellten Ausführungsbeispiel ist wiederrum ein Lockerungsschar 13 gezeigt, z. B. ein solches, das bei der in Fig. 5 gezeigten Einrichtung 10 jeweils am Rahmen 14 fest aber auswechselbar angeordnet werden kann. Das Lockungsschar 13 in Fig. 7 ist ebenso aufgebaut wie dasjenige in Fig. 1, wobei jedoch der Haltearm 15 zwischen zwei Schenkeln 52, 53 eines Tragarmes 54 aufgenommen und befestigt ist. Der Tragarm 54 ist z. B. bei einer Einrichtung 10 gemäß Fig. 5 in entsprechende Haltevorrichtungen des Rahmens 14 einsetzbar. Hinsichtlich der Bodenleiteinrichtung 20 zeigt Fig. 7, dass bei diesem Beispiel eine solche Schwenkverstellung der Bodenleiteinrichtung 20 eingestellt ist, bei der das Bodenleitelement 23 in Bezug auf den Haltearm 15 schräg ausgestellt und aktiv ist. Für die Schwenkbetätigung der Bodenleiteinrichtung 20 ist eine Welle 24 vorgesehen, die an der Bodenleiteinrichtung 20 fest angreift und z. B. durch ein Rohr 55 hindurch geführt ist, wobei am Ende dieser Welle 24 ein Stellantrieb 26 unmittelbar oder mittelbar zur Schwenkbetätigung der Welle 24 um die Achse 21 angreift. Der Stellantrieb 26 ist am Tragarm 54 gehalten.

Ein anderes Ausführungsbeispiel vorteilhafter Art zeigt Fig. 8, wobei hierbei die Bodenleiteinrichtung 20 ein einziges Bauelement ist, das schwenkverstellbar am Haltearm 15 gelagert ist. An diesem einzigen Bodenleitelement greift ein Stellantrieb 26 z. B. über einen Hebelmechanismus als Übertragungsmittel 27 an, der eine Schwenkverstellung um die Achse 21 bei Bedarf und Fixierung in der jeweils eingestellten Winkelstellung möglich macht. Das einstückige Element dieser Bodenleiteinrichtung 20, das in Fig. 8 in Draufsicht dargestellt ist, kann unter Bildung einer konkaven Brustseite, die in Pfeilrichtung 11 weist, bogenförmig hoch gestellt sein. Stattdessen oder zusätzlich dazu kann dieses Element der Bodenleiteinrichtung 20 auch in Bezug auf die Achse 21 nach links und/oder rechts unter einem Winkel abgewinkelt sein, wenn ein Bedarf dafür besteht. Bei einer anderen Ausführungsform ist dieses einzige Element der Bodenleiteinrichtung 20 auf der in Pfeilrichtung 11 weisenden Brustseite konvex gewölbt, z. B. gekrümmt um eine etwa parallel zur Achse 21 verlaufende Achse. Auch andere davon abweichende geometrische Formen für dieses einzige Element der Bodenleiteinrichtung 20 liegen im Rahmen der Erfindung.

Man erkennt, dass die in den einzelnen Figuren gezeigte und zuvor erläuterte Einrichtung einfach und kostengünstig ist und es in einfacher Weise ermöglicht, den Boden vor Erosion zu schützen bzw. bereits vorhandenen Erosionsschäden aktiv entgegen zu wirken und dabei gleichzeitig optimale Bedingungen für das Wachstum von Kulturpflanzen zu schaffen. Es ist in einfacher Weise möglich, streifenweise gelockerten aufgeworfenen Boden gegen die Erosionsrichtung zu bewegen und dadurch sukzessive wieder dahin zu verlagern, wo er einstmals war. Damit ist ein entscheidender Schritt zur nachhaltigen Nutzung von Ackerboden möglich. Vorteilhaft ist ferner, dass mittels der Einrichtung 10 feste oder flüssige Stoffe, insbesondere Saatgut, Düngemittel od. dgl., bis zur Bodenleiteinrichtung, und zwar unterseitig dieser, geleitet und dort abgegeben werden können, wobei solche Stoffe von dem hinter dem Bodenleitelement abfallenden Bodenmaterial bedeckt werden. Bei Einsatz einer Nachlaufeinrichtung wird in vorteilhafter Weise der zur einen oder anderen Seite aufgeworfene Boden vorzugsweise ganzflächig rückverfestigt. Ein weiterer Vorteil der Einrichtung liegt darin, dass diese insofern auch einen Mehrfachnutzen bietet, als eine dammförmige Bearbeitung des Bodens in einfacher Weise möglich ist.

## Patentansprüche

1. Einrichtung zur streifenweisen landwirtschaftlichen Bearbeitung von Böden, mit mindestens einem an einem Rahmen (14) gehaltenen und schräg nach vorn angestellten Lockerungsschar (13) mit einem Haltearm (15) und Schar (16) am freien Ende dieses,
**dadurch gekennzeichnet,**
**dass** am Haltearm (15) auf dessen Vorderseite und in Abstand oberhalb des Schars (16) mindestens eine flächige Bodenleiteinrichtung (20) um eine auf der Vorderseite des Haltearms (15) längs dieses verlaufende Achse (21) schwenkbar gelagert und derart schwenkbetätigbar und beliebig arretierbar ist, dass die Bodenleiteinrichtung (20) den beim Lockern aufgeworfenen Boden je nach Schwenkwinkel vor das Schar (16) und/oder zur einen oder anderen Seite des Schars (16) aufwirft.

2. Einrichtung nach Anspruch 1,
**dadurch gekennzeichnet,**
**dass** die Bodenleiteinrichtung (20) auf jeder Seite des Haltearms (15) mindestens ein flächiges Bodenleitelement (22, 23) aufweist, wobei die beiden Bodenleitelemente (22, 23) unter einem Winkel in der Größenordnung von etwa 45° bis 90° zueinander verlaufen und vorzugsweise fest miteinander verbunden oder in Bezug zueinander selbstständig sind, in Bezug auf den Haltearm (15) symmetrisch angeordnet sind und gegen die Fahrtrichtung nach hinten schräg gestellt sind.

3. Einrichtung nach Anspruch 2,
**dadurch gekennzeichnet,**
**dass** die Bodenleiteinrichtung (20) derart schwenkbetätigbar ist, dass in einer ersten Schwenkstellung ein Bodenleitelement (22) auf einer Seite in Bezug auf den Haltearm (15) schräg ausgestellt und aktiv ist und das Bodenleitelement (23) auf der anderen Seite in Bezug auf den Haltearm (15) an diesen etwa flächig angelegt und inaktiv daran abgestützt ist, und dass in einer zweiten Schwenkstellung die Verhältnisse hinsichtlich der Bodenleitelemente (22, 23) vertauscht sind, und vorzugsweise, dass die Bodenleitelemente (22, 23) relativ zueinander schwenkverstellbar sind.

4. Einrichtung nach Anspruch 2 oder 3,
**dadurch gekennzeichnet,**
**dass** die Bodenleiteinrichtung (20) in den jeweiligen beiden Schwenkstellungen und/oder in beliebigen anderen Schwenkstellungen arretierbar ist.

5. Einrichtung nach einem der Ansprüche 1 bis 4,
**dadurch gekennzeichnet,**
**dass** an der Bodenleiteinrichtung (20) zur Schwenkbetätigung eine mittels eines Stellantriebes (26), z. B. in Gestalt eines druckmittelbetriebenen Arbeitszylinders oder eines Motors oder eines elektromagnetischen oder magnetischen Antriebes, jeweils mit nachgeschaltetem Übertragungsmittel (27), wie Getriebe, Hebel od. dgl., schwenkverstellbare Welle (24) angreift.

6. Einrichtung nach Anspruch 5,
**dadurch gekennzeichnet,**
**dass** die Welle (24) als Hohlwelle und zum Zuführen von festen oder flüssigen Stoffen, insbesondere von Saatgut, Düngemittel od. dgl., durch diese bis zur Bodenleiteinrichtung (20) ausgebildet ist.

7. Einrichtung nach Anspruch 6,
**dadurch gekennzeichnet,**
**dass** die Hohlwelle (24) auf dem Bereich, der sich längs der Unterseite jedes Bodenleitelements (22, 23) der Bodenleiteinrichtung (20) erstreckt, Durchlässe (28, 29) für den Auslass von festen oder flüssigen Stoffen, insbesondere von Saatgut, Düngemittel od. dgl., unterhalb dieser Unterseite aufweist, die von dem hinter dem Bodenleitelement (22, 23) abfallenden Bodenmaterial bedeckt werden können.

8. Einrichtung nach Anspruch 7,
**dadurch gekennzeichnet,**
**dass** die Hohlwelle (24) im Bereich der Durchlässe (28, 29) im Inneren eine relativ zur Hohlwelle (24) feststehende Sperrwand (30) enthält, mittels der in einer Schwenkstellung der mindestens eine Durchlass (28) unterhalb des schräg ausgestellten und aktiven Bodenleitelements (22) freigebbar ist, während der mindestens eine andere Durchlass (29) verschließbar ist, der dem auf der anderen Seite des Haltearms (15) befindlichen, inaktiven Bodenleitelement (23) zugeordnet ist, und in der anderen Schwenkstellung umgekehrt.

9. Einrichtung nach einem der Ansprüche 1 bis 8,
**dadurch gekennzeichnet,**
**dass** mehrere Lockerungsschare (13) vorgesehen sind, die jeweils einen eigenen Stellantrieb (26) aufweisen.

10. Einrichtung nach Anspruch 9,
**dadurch gekennzeichnet,**
**dass** am Rahmen (14) in einer Reihe oder in mehreren hintereinander folgenden Reihen gleichartige Lockerungsschare (13a bis 13g) befestigt sind, die in festen oder verstellbaren Querabständen angeordnet und feststellbar sind.

11. Einrichtung nach Anspruch 10,
**dadurch gekennzeichnet,**
**dass** die Lockerungsschare (13a bis 13c) einer Reihe in Bezug auf die Lockerungsschare (13d bis 13g) der anderen Reihe mit Querversatz am Rahmen (14) angeordnet sind.

12. Einrichtung nach Anspruch 10 oder 11,
**dadurch gekennzeichnet,**
**dass** am Rahmen (14) unmittelbar oder mittelbar über einen dazwischen befindlichen Halterahmen (41) eine Nachlaufeinrichtung (40) fest aber lösbar und auswechselbar angebracht ist, die längs einer Reihe quer zur Fahrtrichtung angeordnete Nachlaufelemente (42), z. B. Rollen, Walzen, Räder, Doppelrillenräder od. dgl., aufweist, die am Boden (12) abstützen und den zur einen oder anderen Seite aufgeworfenen Boden vorzugsweise ganzflächig rückverfestigen.

13. Einrichtung nach Anspruch 12,
**dadurch gekennzeichnet,**
**dass** die Nachlaufeinrichtung (40) mechanische, druckmittelbetriebene, motorische od. dgl. Mittel (45, 48, 50) zur Höhenverstellung und/oder zur horizontalen Querverstellung aufweist, z. B. zur Querverstellung um das Maß (a) der Arbeitsbreite eines Lockerungsschars (13a bis 13c) zur einen oder anderen Seite.

14. Einrichtung nach Anspruch 13,
**dadurch gekennzeichnet,**
**dass** die Mittel (45, 48, 50) schwenkbetätigbare Hebel oder geradlinig wirkende Stellglieder, wie translatorisch wirkende Stellantriebe, Schraubelemente od. dgl., aufweisen.

15. Einrichtung nach einem der Ansprüche 1 bis 9,
**dadurch gekennzeichnet,**
**dass** jedes Lockerungsschar (13) über eine Parallelogrammlenkerbaueinheit (17) am Rahmen (14) gelenkig gehalten ist und mittels eines nachlaufenden Stützrades (32) am Boden (12) abgestützt ist und der Bodenkontur folgt.

## Claims

1. Device for cultivating soils in strips, with at least one loosening share (13) which is held on a frame (14) and is lined up obliquely forwards, with a holding arm (15) and a share (16) at the free end of the latter,
**characterized**
**in that** at least one flat soil-guiding device (20) is mounted on the holding arm (15), on the front side thereof at a distance above the share (16), so as to be pivotable about an axis (21) running along the holding arm (15) on the front side thereof, and is pivotally actuable and lockable as desired in such a manner that the soil-guiding device (20) throws up the soil, which has been thrown up during the loosening operation, in front of the share (16) and/or to the one or other side of the share (16) depending in each case on the pivot angle.

2. Device according to Claim 1,
**characterized**
**in that** the soil-guiding device (20) has at least one flat soil-guiding element (22, 23) on each side of the holding arm (15), wherein the two soil-guiding elements (22, 23) run at an angle of the order of magnitude of approximately 45° to 90° with respect to each other and are preferably fixedly connected to each other or are independent with respect to each other, and are arranged symmetrically with respect to the holding arm (15) and are positioned obliquely rearwards counter to the direction of travel.

3. Device according to Claim 2,
**characterized**
**in that** the soil-guiding device (20) is pivotally actuable in such a manner that, in a first pivoted position, a soil-guiding element (22) on one side is deployed obliquely with respect to the holding arm (15) and is active, and the soil-guiding element (23) on the other side is placed onto the holding arm (15) in an approximately flat manner with respect thereto and is supported inactively thereon, and in that, in a second pivoted position, the relationships in respect of the soil-guiding elements (22, 23) are interchanged, and preferably in that the soil-guiding elements (22, 23) are pivotally adjustable relative to each other.

4. Device according to Claim 2 or 3,
**characterized**
**in that** the soil-guiding device (20) is lockable in the respective two pivoted positions and/or in any other pivoted positions.

5. Device according to one of Claims 1 to 4,
**characterized**
**in that** a shaft (24) which is pivotally adjustable by means of an actuator (26), for example in the form of a pressure-medium-operated working cylinder or a motor or an electromagnetic or magnetic drive, in each case with a downstream transmission means (27), such as a gearing, lever or the like, acts on the soil-guiding device (20) for the pivotal actuation.

6. Device according to Claim 5,
**characterized**
**in that** the shaft (24) is designed as a hollow shaft and for supplying solid or liquid materials, in particular seeds, fertilizer or the like, through said hollow shaft as far as the soil-guiding device (20).

7. Device according to Claim 6,
**characterized**
**in that** the hollow shaft (24), on the region which extends along the lower side of each soil-guiding element (22, 23) of the soil-guiding device (20), has passages (28, 29) for the outlet of solid or liquid materials, in particular seeds, fertilizers or the like, below said lower side, which passages can be covered by the soil material dropping behind the soil-guiding element (22, 23).

8. Device according to Claim 7,
**characterized**
**in that** the interior of the hollow shaft (24) contains, in the region of the passages (28, 29), a blocking wall (30) which is fixed relative to the hollow shaft (24) and by means of which, in a pivoted position, the at least one passage (28) can be opened up below the obliquely deployed and active soil-guiding element (22), while the at least one other passage (29), which is assigned to the inactive soil-guiding element (23) located on the other side of holding arm (15), can be closed, and vice versa in the other pivoted position.

9. Device according to one of Claims 1 to 8,
**characterized**
**in that** a plurality of loosening shares (13) which each have a dedicated actuator (26) are provided.

10. Device according to Claim 9,
**characterized**
**in that** identical loosening shares (13a to 13g) which are arranged and are fixable at fixed or adjustable transverse distances are fastened to the frame (14) in one row or in a plurality of rows following one behind the other.

11. Device according to Claim 10,
**characterized**
**in that** the loosening shares (13a to 13c) of one row are arranged with a transverse offset on the frame (14) with respect to the loosening shares (13d to 13g) of the other row.

12. Device according to Claim 10 or 11,
**characterized**
**in that** a trailing device (40) is attached fixedly, but releasably and exchangeably, to the frame (14) directly, or indirectly via a holding frame (41) located in between, said trailing device having trailing elements (42), for example rollers, rolls, wheels, double groove wheels or the like, which are arranged along a row transversely with respect to the direction of travel, are supported on the soil (12) and re-compact the soil thrown up to the one or other side, preferably over the entire area.

13. Device according to Claim 12,
**characterized**
**in that** the trailing device (40) has means (45, 48, 50), which are mechanical, pressure-medium-operated, motorized or the like, for the height adjustment and/or for the horizontal transverse adjustment, for example for the transverse adjustment by the extent (a) of the working width of a loosening share (13a to 13c) to the one or other side.

14. Device according to Claim 13,
**characterized**
**in that** the means (45, 48, 50) have pivotally actuable levers or actuating elements acting rectilinearly, such as actuators, screw elements or the like acting in a translatory manner.

15. Device according to one of Claims 1 to 9,
**characterized**
**in that** each loosening share (13) is held in an articulated manner on the frame (14) via a parallelogram link constructional unit (17) and is supported on the soil (12) by means of a trailing supporting wheel (32) and follows the soil contour.

## Revendications

1. Dispositif de traitement agronomique de bandes de terre, le dispositif présentant au moins une charrue d'ameublissement (13) maintenue sur un bâti (14) et inclinée vers l'avant, dotée d'un bras de maintien (15) et d'un soc (16) à l'extrémité libre de ce dernier, **caractérisé en ce que**
au moins un dispositif (20) plat de guidage de terre est monté à pivotement autour d'un axe (21) qui s'étend le long du côté avant du bras de maintien (15), sur le côté avant du bras de maintien (15) et à distance au-dessus du soc (16), et peut être actionné en pivotement et bloqué à volonté de telle sorte que selon son angle de pivotement, le dispositif (20) de guidage au sol projette en avant du soc (16) et/ou sur un ou l'autre côté du soc (16) la terre projetée lors de l'ameublissement.

2. Dispositif selon la revendication 1, **caractérisé en ce que** le dispositif (20) de guidage de terre présente sur chaque côté du bras de maintien (15) au moins un élément plat (22, 23) de guidage de terre, les deux éléments (22, 23) de guidage de terre s'étendant l'un par rapport à l'autre sous un angle de l'ordre d'environ 45° à 90° et étant raccordés l'un à l'autre de préférence fixement ou étant autonomes l'un par rapport à l'autre, disposés symétriquement par rapport au bras de maintien (15) et inclinés vers l'arrière dans la direction de déplacement.

3. Dispositif selon la revendication 2, **caractérisé en ce que** le dispositif (20) de guidage de terre peut être amené à pivoter de telle sorte que dans une première position de pivotement, un élément (22) de guidage de terre situé sur un côté est placé obliquement par rapport au bras de maintien (15) et est actif et l'élément (23) de guidage de terre disposé de l'autre côté est placé sur le bras de maintien (15) sensiblement à plat et s'y appuie de manière inactive, **en ce que** dans une deuxième position de pivotement, les situations des éléments (22, 23) de guidage de terre sont échangées l'une avec l'autre et de préférence **en ce que** les éléments (22, 23) de guidage de terre peuvent être pivotés l'un par rapport à l'autre.

4. Dispositif selon les revendications 2 ou 3, **caractérisé en ce que** le dispositif (20) de guidage de terre peut être bloqué dans chacune des deux positions de pivotement et/ou dans d'autres positions de pivotement quelconques.

5. Dispositif selon l'une des revendications 1 à 4, **caractérisé en ce qu'**un arbre (24) ajustable en pivotement engage le dispositif (20) de guidage de terre pour actionner son pivotement au moyen d'un entraînement de réglage (26) qui présente par exemple la forme d'un vérin de travail actionné par un fluide sous pression, d'un moteur ou d'un entraînement électromagnétique ou magnétique, tous suivis par des moyens de transmission (27), par exemple des transmissions, des leviers ou similaires.

6. Dispositif selon la revendication 5, **caractérisé en ce que** l'arbre (24) est configuré comme arbre creux et pour amener des matières solides ou liquides, en particulier des semences, des engrais ou similaires, jusqu'au dispositif (20) de guidage de terre.

7. Dispositif selon la revendication 6, **caractérisé en ce que** l'arbre creux (24), sur la partie qui s'étend le long du côté inférieur de chaque élément (22, 23) de guidage de terre du dispositif (20) de guidage de terre, présente des passages (28, 29) permettant la sortie de matière solide ou liquide, en particulier de semences, d'engrais ou similaires, en dessous de ce côté inférieur, qui peuvent être recouverts par le matériau de terre qui tombe en arrière de l'élément (22, 23) de guidage de terre.

8. Dispositif selon la revendication 7, **caractérisé en ce qu'**au niveau des passages (28, 29), l'arbre creux (24) contient à l'intérieur une paroi de blocage (30) fixe par rapport à l'arbre creux (24) et au moyen de laquelle, dans une position d'inclinaison, le ou les passages (28) peuvent être libérés en dessous de l'élément (22) de guidage de terre placé obliquement et actif, tandis que le ou les autres passages (29) associés à l'élément (23) de guidage de terre inactif situé de l'autre côté du bras de maintien (15) peuvent être fermés, et inversement dans l'autre position d'inclinaison.

9. Dispositif selon l'une des revendications 1 à 8, **caractérisé en ce que** plusieurs charrues d'ameublissement (13) sont prévues et présentent chacune leur propre entraînement de réglage (26).

10. Dispositif selon la revendication 9, **caractérisé en ce que** sur le bâti (14) sont fixées en une rangée ou en plusieurs rangées successives des charrues d'ameublissement (13a à 13g) similaires qui sont disposées et peuvent être fixées à des distances transversales fixes ou ajustables.

11. Dispositif selon la revendication 10, **caractérisé en ce que** les charrues d'ameublissement (13a à 13c) d'une série sont disposées sur le bâti (14) à un décalage transversal par rapport aux charrues d'ameublissement (13d à 13g) de l'autre série.

12. Dispositif selon les revendications 10 ou 11, **caractérisé en ce qu'**un dispositif de suivi (40) est placé de manière fixe mais libérable et remplaçable sur le bâti (14), directement ou indirectement au-dessus d'un bâti de maintien (41) situé en position intermédiaire, et présente des éléments de suivi (42), par exemple des rouleaux, des cylindres, des roues, des roues à double rainure ou similaires, disposés en série transversale par rapport à la direction d'avancement, et qui s'appuient sur le sol (12) et re-solidifient de préférence sur toute la surface la terre qui a été rejetée sur un côté ou l'autre.

13. Dispositif selon la revendication 12, **caractérisé en ce que** le dispositif de suivi (40) présente des moyens mécaniques, actionnés par fluide sous pression, par moteur ou similaires (45, 48, 50) qui permettent l'ajustement en hauteur et/ou l'ajustement horizontal transversal, par exemple pour l'ajustement transversal d'une distance (a) de la largeur de travail d'une charrue d'ameublissement (13a à 13c), sur un ou l'autre côté.

14. Dispositif selon la revendication 13, **caractérisé en ce que** les moyens (45, 48, 50) présentent des leviers actionnables par pivotement ou des organes de réglage agissant en ligne droite, par exemple des entraînements de réglage agissant par translation, des éléments hélicoïdaux ou similaires.

15. Dispositif selon l'une des revendications 1 à 9, **caractérisé en ce que** chaque charrue d'ameublissement (13) est maintenue de manière articulée sur le bâti (14) par l'intermédiaire d'une unité (17) de montage à bras en parallélogramme et s'appuie sur le sol (12) au moyen d'une roue de soutien (32) de suivi et suit le contour du sol.
